# EUROPEAN PATENT APPLICATION

(11) **EP 3 007 412 A1**
(43) Date of publication of application: **13.04.2016**
(21) Application number: 14803674.2
(22) Date of filing: 21.05.2014
(51) Int. Cl.: H04M 1/00

(54) **ELECTRONIC DEVICE, AND PROGRAM**

(30) Priority: 29.05.2013 JP 2013112552; 29.05.2013 JP 2013112551
(71) Applicant: Nikon Corporation, Tokyo 108-6290 (JP)
(72) Inventor: NAMIKAWA, Aiko, Tokyo 100-8331 (JP); SATO, Takuya, Tokyo 100-8331 (JP); MOCHIMIZO, Noriaki, Tokyo 100-8331 (JP); MIYAZAKI, Wataru, Tokyo 100-8331 (JP); SEKIGUCHI, Masakazu, Tokyo 100-8331 (JP); SEKIGUCHI, Naoki, Tokyo 100-8331 (JP)
(74) Representative: Whitlock, Holly Elizabeth Ann
(86) International application number: PCT/JP2014/063480
(87) International publication number: WO 2014/192617

(57) **Abstract**

Provided is an electronic device that offers improved convenience of use, the electronic device including: a communication unit (21) that communicates with, in response to use of an external device (10), the external device through proximity communication or intra-body communication; and a control unit (26) that provides a display relating to the external device on a first display unit (23).

## Description

### TECHNICAL FIELD

The present invention relates to electronic devices and programs.

### BACKGROUND ART

There has been conventionally suggested an art that allows two devices to communicate with each other through Near Field Communication and to display information about one device on a display unit of the other device (for example, see Patent Document 1).

### PRIOR ART DOCUMENTS

### PATENT DOCUMENTS

Patent Document 1: Japanese Patent Application Publication No. 2011-205547

### SUMMARY OF THE INVENTION

### PROBLEMS TO BE SOLVED BY THE INVENTION

However, the conventional suggestion lacks the consideration of the situation of a user and the states of two devices, and does not offer sufficient convenience of use.

The present invention has been made in the view of the above problems, and aims to provide an electronic device that offers improved convenience of use, and a program to achieve an electronic device that offers improved convenience of use.

### MEANS FOR SOLVING THE PROBLEMS

The electronic device of the present invention includes: a communication unit that communicates with, in response to use of an external device, the external device through proximity communication or intra-body communication; and a control unit that displays information relating to the external device on a first display unit during communication with the external device.

In this case, a first storage unit that stores data may be provided, and the control unit may provide a display relating to the data stored in the first storage unit on the first display unit. Moreover, the communication unit may receive data stored in a second storage unit included in the external device, and the control unit may provide a display relating to the data stored in the second storage unit on the first display unit. Moreover, the communication unit may receive data relating to a display provided on a second display unit included in the external device, and the control unit may provide a display according to the display provided on the second display unit on the first display unit. In this case, the control unit may provide a display according to the display provided on the second display unit on the first display unit when a user using the external device cannot see the second display unit.

In the electronic device of the present invention, the control unit may display a schedule of a user using the external device on the first display unit. Moreover, the control unit may display, when a user uses the external device for a specific user different from the user, a schedule of the specific user on the first display unit. Moreover, the control unit may display information to assist a user using the external device to make contact with another user on the first display unit. Furthermore, the communication unit may receive operation data of an operation unit included in the external device, and the control unit may control a display on the first display unit based on the operation data. Moreover, the control unit may change information displayed on the first display unit depending on a user with whom a user using the external device makes contact.

The electronic device of the present invention includes: an operation unit; a communication unit that communicates with, in response to use of an external device, the external device through proximity communication or intra-body communication; and a control unit that causes the external device to operate in accordance with an operation of the operation unit during communication with the external device through the communication unit.

In this case, a data transmitting unit that transmits data created by a user through an operation of the operation unit to a predetermined destination may be provided. Moreover, a display unit that provides a display may be provided, and the control unit may control a display on the display unit in accordance with an operation of the operation unit by a user. In this case, the operation unit may include a touch panel provided to the display unit, and the control unit may display an operation screen of the external device on the display unit and causes the external device to operate in accordance with an operation of the touch panel by a user during communication with the external device through the communication unit.

The electronic device of the present invention includes: a first display unit that provides a display; a communication unit that communicates with, in response to use of an external device including an operation unit, the external device through proximity communication or intra-body communication; and a control unit that controls a display on the first display unit in accordance with an operation of the operation unit by a user during communication with the external device through the communication unit.

In this case, the external device may include a second display unit, and the control unit may control, when a user cannot see the second display unit, the display on the first display unit in accordance with an operation of the operation unit by the user. In this case, the control unit may provide a display according to a display provided on the second display unit on the first display unit. Moreover, the control unit may provide the display provided on the second display unit on the first display unit in a scrollable manner. Moreover, the control unit may control scrolling of the display on the first display unit in accordance with an operation of the operation unit by a user.

The program of the present invention is a program causing a computer embedded in an electronic device including a display unit to execute a process, the process including: communicating with, in response to use of an external device, the external device; and displaying information relating to the external device on the display unit during communication with the external device. Moreover, the program of the present invention is a program causing a computer embedded in an electronic device including an operation unit to execute a process, the process including: communicating with, in response to use of an external device, the external device; receiving an operation to the operation unit by a user during communication with the external device; and causing the external device to operate in accordance with the operation by the user. Moreover, the program of the present invention is a program causing a computer embedded in an electronic device including a display unit to execute a process, the process including: communicating with, in response to use of an external device including an operation unit, the external device; acquiring information about an operation of the operation unit by a user from the external device during communication with the external device; and controlling a display on the display unit in accordance with acquired information about the operation.

### EFFECTS OF THE INVENTION

The electronic device of the present invention can improve convenience of use. Additionally, the program of the present invention can achieve an electronic device that offers improved convenience of use.

### BRIEF DESCRIPTION OF DRAWINGS

FIG. 1 is a block diagram illustrating a configuration of an information processing system in accordance with a first embodiment;
FIG. 2 is a flowchart of a process and an operation in the information processing system of the first embodiment;
FIG. 3 is a diagram illustrating a state of a user when the process of FIG. 2 is executed;
FIG. 4A is a diagram illustrating a state before the display of a display unit of a PC is changed, FIG. 4B is a diagram illustrating a state after the display of the display unit is changed, and FIG. 4C is a diagram illustrating another example of a state after the display of the display unit is changed;
FIG. 5 is a block diagram illustrating a configuration of an information processing system in accordance with a second embodiment;
FIG. 6 is a flowchart illustrating a process and an operation of the information processing system of the second embodiment;
FIG. 7 is a diagram illustrating a state of a user when the process of FIG. 6 is executed; and
FIG. 8A is a diagram illustrating a state before the display of a display unit of a watch is changed, FIG. 8B is a diagram illustrating a state where a screen for inquiring the necessity of changing the display is displayed on the display unit, FIG. 8C is a diagram illustrating a state after the display of the display unit is changed, and FIG. 8D is a diagram illustrating another example of a state after the display of the display unit is changed.

### MODES FOR CARRYING OUT THE INVENTION

### «First embodiment»

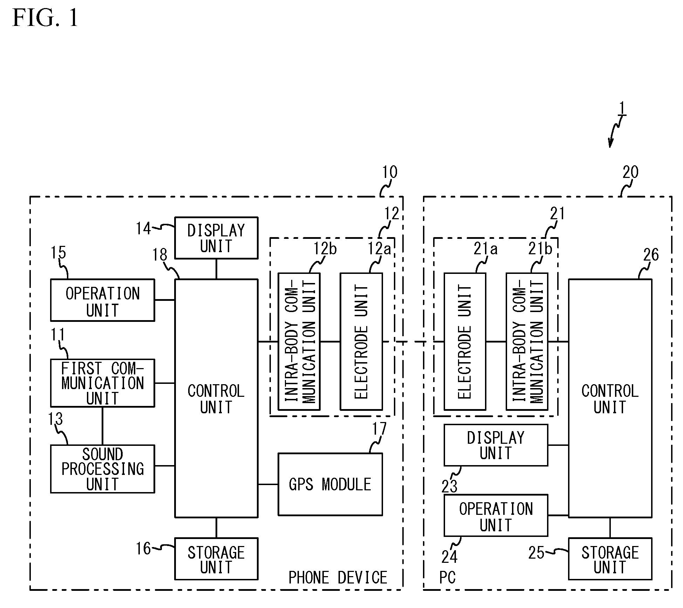

Hereinafter, a detailed description will be given of an information processing system in accordance with a first embodiment based on FIG. 1 through FIG. 4. FIG. 1 is a block diagram illustrating a configuration of an information processing system 1 in accordance with the first embodiment.

As illustrated in FIG. 1, the information processing system 1 includes a phone device 10, and a PC (Personal Computer) 20. In the information processing system 1, the phone device 10 and the PC 20 communicate with each other through proximity communication or intra-body communication to operate in cooperation.

### (Phone device 10)

The phone device 10 is a mobile phone, a smartphone, or the like, and has functions for creating, transmitting, and receiving e-mails, for connecting to the Internet, for managing schedule, and the like in addition to a verbal communication function. The phone device 10 includes, as illustrate in FIG. 1, a first communication unit 11, a second communication unit 12, a sound processing unit 13, a display unit 14, an operation unit 15, a storage unit 16, a GPS (Global Positioning System) module 17, a control unit 18, and the like.

The first communication unit 11 includes a wireless communication circuit and an antenna, receives a signal transmitted from a base station through a radio channel with the antenna, and converts the frequency by the wireless communication circuit to convert the signal into audio data.

The second communication unit 12 communicates through proximity communication such as Bluetooth (registered trademark), Felica (registered trademark), RFID (Radio Frequency Identification), or the like, or through intra-body communication through a user. The second communication unit 12 of the present embodiment includes an electrode unit 12a and an intra-body communication unit 12b, and communicates with the PC 20 (a communication unit 21) through intra-body communication.

The electrode unit 12a includes a signal electrode and a ground electrode, and is an electrode for intra-body communication through the user. The electrode unit 12a is located in a gripped part of the phone device 10 so as to easily contact with the hand of the user.

The intra-body communication unit 12b includes a transmit unit composed of an electric circuit having a bandpass filter, and modulates data to be transmitted to generate a transmission signal. The intra-body communication unit may have a receiving function. In the present embodiment, assume that the intra-body communication between the phone device 10 and the PC 20 is established when the user initiates a call on the phone device 10.

The sound processing unit 13 includes a circuit for D/A conversion and amplification, and outputs a sound from a loudspeaker not illustrated. The voice of the user is collected by a microphone not illustrated, is converted into a transmission signal, and is transmitted to the sound processing unit 13. The sound processing unit 13 amplifies and A/D converts the transmission signal into digital data, and transmits the digital data to the base station through the first communication unit 11.

The display unit 14 is, for example, a liquid crystal display, and displays various types of information such as information about date and time, Web information (Web pages), schedule data, and the like. The operation unit 15 includes a touch panel and a virtual keyboard.

The storage unit 16 includes, for example, a non-volatile flash memory, and stores a table of telephone numbers, schedule data of the user, and the like in addition to various programs.

The GPS module 17 is a sensor that detects a position (e.g., a latitude and a longitude) of the phone device 10.

The control unit 18 includes a CPU (Central Processing Unit), a RAM (Random Access Memory), a ROM (Read Only Memory), and the like, and controls the whole of the phone device 10. In the present embodiment, when the user makes a phone call, the control unit 18 instructs the control unit 26 to provide the display that has been displayed on the display unit 14 on a display unit 23, to display data stored in the storage unit 16 (e.g., schedule data, or the table of telephone numbers) on the display unit 23, or to display schedule data stored in the PC 20 on the display unit 23.

### (PC 20)

The PC 20 is a desktop PC, a notebook PC, a tablet PC, or the like, and includes the communication unit 21, the display unit 23, an operation unit 24, a storage unit 25, and a control unit 26.

The communication unit 21 communicates with the phone device 10 through proximity communication or intra-body communication. In the present embodiment, the communication unit 21 includes an electrode unit 21a and an intra-body communication unit 21b, and communicates with the phone device 10 through intra-body communication.

The electrode unit 21a includes a signal electrode and a ground electrode, and is an electrode for intra-body communication through the user. The electrode unit 21a is located in a position that easily contacts with the hand of the user, for example, in a part of the operation unit 24 (a keyboard or a mouse).

The intra-body communication unit 21b includes a transmit unit composed of an electric circuit having a bandpass filter, and modulates data to be transmitted to generate a transmission signal. Assume that the intra-body communication unit also has a receiving function.

The display unit 23 is, for example, a liquid crystal display, and provides various displays such as the display of data stored in the storage unit 25. In the present embodiment, the display unit 23 also provides a display relating to the phone device 10. The examples of the operation unit 24 include a keyboard, a mouse, a touch panel, and the like.

The storage unit 25 includes, for example, a non-volatile flash memory, and stores various kinds of data such as schedule data of the user in addition to various programs.

The control unit 26 includes a CPU, a ROM, a RAM, and the like, and controls the whole of the PC 20. In the present embodiment, the control unit 26 controls the display on the display unit 23 in response to the instruction from the control unit 18 of the phone device 10 when the communication with the phone device 10 is established.

### (Process/Operation)

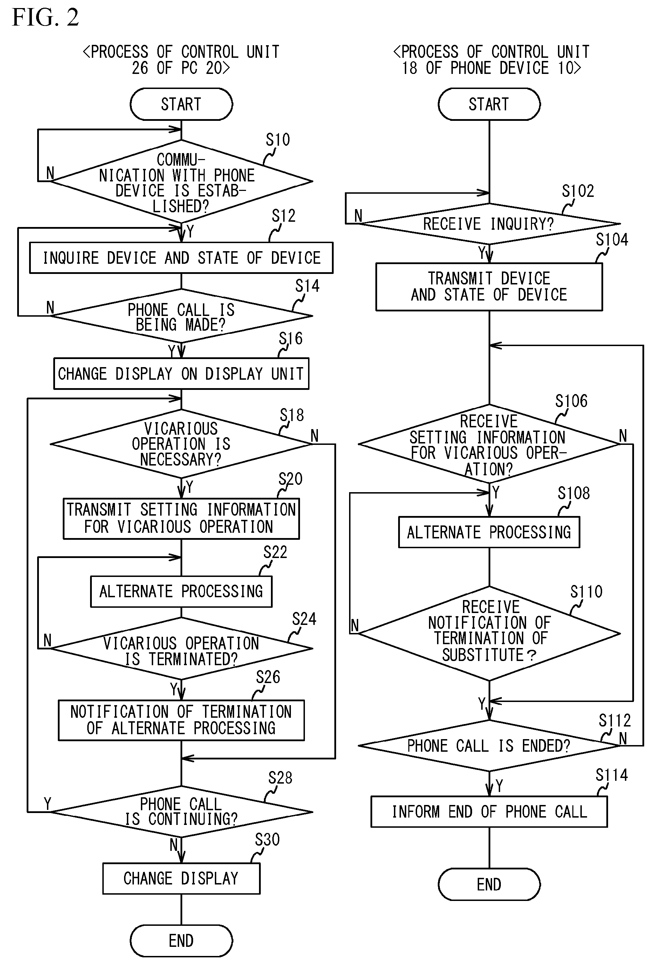

A detailed description will next be given of a process/an operation in the information processing system 1 along a flowchart of FIG. 2 with reference to other drawings as appropriate.

FIG. 2 illustrates a flowchart of a process of the control unit 26 of the PC 20 and a flowchart of a process of the control unit 18 of the phone device 10. The process of the control unit 26 and the process of the control unit 18 are simultaneously executed in parallel.

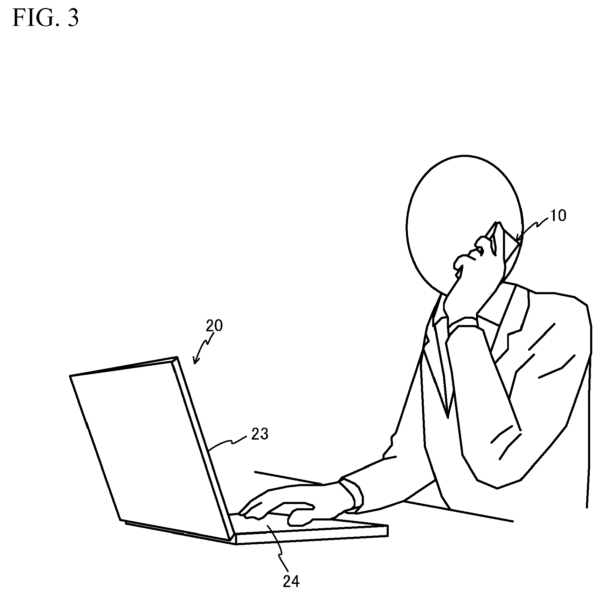

In the process of FIG. 2, at step S10, the control unit 26 of the PC 20 waits until the intra-body communication with the phone device 10 is established. That is to say, the control unit 26 waits until the user becomes in a state where the user is touching the operation unit 24 of the PC 20 while holding the phone device 10 as illustrated in FIG. 3. When the user becomes in the state of FIG. 3, the control unit 26 moves to step S12.

At step S12, the control unit 26 inquires the information about the phone device 10 (identification information) and the state of the phone device 10 (whether the user is calling) to the phone device 10. On the other hand, the control unit 18 of the phone device 10 waits until it receives the inquiry from the control unit 26 at step S102. Thus, when the inquiry is received, the control unit 18 moves to step S104, and transmits the information on the phone device 10 (identification information) and the state of the phone device 10 to the PC 20 (the control unit 26). When the user is on the phone with use of the phone device 10, the control unit 18 transmits the identification information of the phone device 10 and information indicating that the user is on the phone to the control unit 26 through the second communication unit 12.

On the other hand, after receiving the information from the control unit 18, the control unit 26 of the PC 20 determines whether a phone call is being made on the phone device 10 at step S14. When the determination is No, the process returns to step S12, and the process and the determination at steps S12 and S14 are repeated. That is, it can be said that the control unit 26 continues inquiring whether the line becomes busy in the phone device 10 to the control unit 18 at steps S12 and S14. On the other hand, when the determination at step S14 is Yes, the control unit 26 moves to step S16.

At step S16, the control unit 26 changes the display on the display unit 23. More specifically, the control unit 26 provides a display relating to the schedule of the user on the display unit 23.

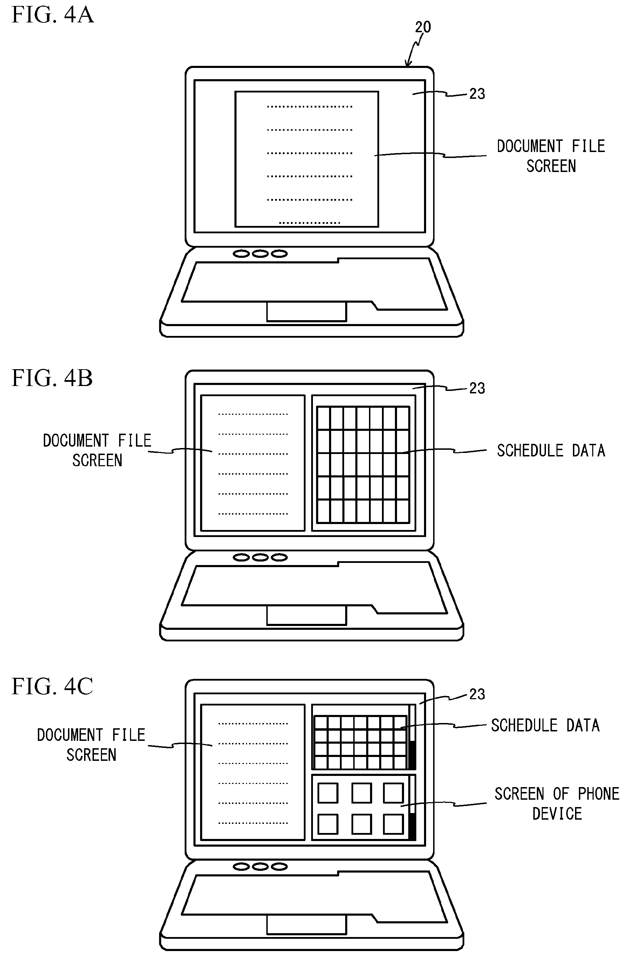

FIG. 4A illustrates a state before the display on the display unit 23 is changed, and FIG. 4B illustrates a state after the display on the display unit 23 is changed. In the example after the change illustrated in FIG. 4B, the control unit 26 displays a screen that has been displayed before the phone call is initiated on the left half of the display unit 23 (for example, a screen of a document file (see FIG. 4A)), and displays schedule data of the user stored in the storage unit 25 on the right half. The schedule is frequently checked during the phone call. When the user holds the phone device 10 in the dominant hand while using the phone device 10, it becomes difficult to operate the personal computer. Thus, the present embodiment automatically displays the schedule data of the user on the display unit 23 while the user is on the phone, allowing the user to handle the call without feeling stressed. The control unit 26 may make the user select whether to change the display at step S16, and then may change the display (or may not change the display). The user may preliminarily set whether to change the display depending on an opposite party.

The control unit 26 may receive schedule data stored in the storage unit 16 of the phone device 10 to display it on the display unit 23 as well as schedule data stored in the storage unit 25 of the PC 20. This configuration allows the user to thoroughly recognize his/her schedule even when the storage unit 25 of the PC 20 stores schedule data relating to business and the storage unit 16 of the phone device 10 stores a private schedule. When either schedule data is displayed, the user may select which data is to be displayed as appropriate, or may preliminarily determine which data is to be displayed with respect to each opposite party. The control unit 26 may display a list (table) of telephone numbers or a list of e-mail addresses stored in the storage unit 16. This configuration allows the user to give the telephone number or the e-mail address of a mutual acquaintance verbally without keeping the opposite party waiting.

Furthermore, for example, as illustrated in FIG. 4C, the control unit 26 may receive the contents of the display that has been displayed on the display unit 14 of the phone device 10 before the phone call (for example, a menu screen or a Web page) from the phone device 10, and displays it on the display unit 23. This allows the user to recognize the display of the phone device 10 with use of the display unit 23 even when the user cannot check the display on the display unit 14 because the user holds the phone device 10 to user's ear. When the contents of the display that has been displayed on the display unit 14 of the phone device 10 are the display of the Internet (Web page), the control unit 26 receives the URL from the control unit 18, acquires the contents of the Web page through an Internet connection not illustrated, and may display it on the display unit 23. When the display that has been displayed on the display unit 14 of the phone device 10 is displayed on the display unit 23 of the PC 20, the control unit 18 displays nothing on the display unit 14. That is to say, when the user is on the phone, and cannot see the display on the display unit 14, nothing is displayed on the display unit 14. The control unit 26 of the PC 20 may receive data in the storage unit 16 of the phone device 10, or may display the contents provided on the display unit 14 on the display unit 23 through intra-body communication or proximity communication between the second communication unit 12 and the communication unit 21, or through the wireless communication.

Back to FIG. 2, the control unit 26 of the PC 20 moves to step S18 after step S16, and determines whether a vicarious operation is necessary. Here, the vicarious operation allows the operation through the operation unit 24 of the PC 20 instead of the operation through the operation unit 15 of the phone device 10 to execute the process in the phone device 10. For example, when the user was creating an e-mail in the phone device 10 before the phone call, the vicarious operation enables the operation for creating the e-mail through the operation unit 24 (a keyboard or a mouse) of the PC 20 during the call.

At step S18, the control unit 26 provides a display about the vicarious operation on the display unit 23 to confirm user's will, and determines whether the vicarious operation is necessary, for example. When the determination at step S18 is No (when the vicarious operation is unnecessary), the control unit 26 moves to step S28. When the determination is Yes (when the vicarious operation is necessary), the control unit 26 moves to step S20.

At step S20, the control unit 26 transmits setting information for the vicarious operation to the control unit 18 of the phone device 10. The setting information for the vicarious operation means information necessary for cooperation between the control unit 26 and the control unit 18 and information about instructions. At step S22, the control unit 26 executes alternate processing.

On the other hand, the control unit 18 of the phone device 10 determines whether it receives the setting information for the vicarious operation at step S106. When the determination here is No, the process moves to step S112. When the determination here is Yes, the process moves to step S108. At step S108, the control unit 18 executes the alternate processing.

Here, in the alternate processing at steps S22 and S108, the control unit 26 and the control unit 18 cooperate with each other to implement the alternate processing. For example, when the contents of the display that has been displayed on the display unit 14 of the phone device 10 before the phone call (e.g., a menu screen) is displayed on the display unit 23 as illustrated in FIG. 4C, and an icon for creating an e-mail is selected by the user, the control unit 18 executes a program of creating an e-mail, and transmits the screen for creating an e-mail generated by the execution of the program to the control unit 26. Then, the control unit 26 displays the screen for creating an e-mail on the display unit 23. Moreover, the control unit 26 transmits an input text or a transmit instruction to the control unit 18 when the user inputs a text of the e-mail or issues the transmit instruction through the operation unit 24. In this case, the control unit 18 transmits the created e-mail to a designated destination through an Internet connection.

The alternate processing is not limited to a process of creating an e-mail, and may be applied to various processes. For example, when the opposite party is an auto-answer system by a computer, it may be necessary to input numbers after voice. In such a case, if the operation using the operation unit 15 of the phone device 10 is necessary, the phone device 10 needs to be put away from the ear, and the operation is difficult to carry out. Thus, the present embodiment treats the input in the operation unit 24 (such as a numeric keypad) of the PC 20 as the input to the operation unit 15 as the vicarious operation in the aforementioned case. This eliminates the need to put the phone device 10 away from the ear at the time of input, thereby improving user's convenience.

The control unit 26 moves to step S24 after step S22. At step S24, the control unit 26 determines whether the vicarious operation is terminated. The control unit 26 can display an icon used to terminate the vicarious operation on the display unit 23 and determine that the vicarious operation is terminated when the icon is selected by the user. When the determination at step S24 is No, the process returns to step S22. When the determination is Yes, the process moves to step S26. At step S26, the control unit 26 transmits a notification of the termination of the alternate processing to the control unit 18 of the phone device 10.

On the other hand, the control unit 18 determines whether the notification of the termination of the substitute is received at step S110. When the determination here is No, the process returns to step S108. When the determination is Yes, the process moves to step S 112. At step 112, the control unit 18 determines whether the phone call by the user is ended. When the determination here is No, the process returns to step S106. When the determination is Yes, the process moves to step S114.

At step S 114, the control unit 18 informs the control unit 26 of the PC 20 of the end of the phone call. The entire process of the control unit 18 in FIG. 2 ends as described above.

On the other hand, the control unit 26 determines whether the phone call on the phone device 10 is continuing at step S28. In this case, when the end of the phone call is informed from the control unit 18 of the phone device 10 (after step S114 is executed), the determination at step S28 is No. When the determination at step S28 is Yes, the process returns to step S18. When the determination at step S28 is No, the process moves to step S30.

At step S30, the control unit 26 changes the display on the display unit 23. More specifically, the control unit 26 restores the display on the display unit 23 to the display before the display change at step S16 was performed (see FIG. 4A). The entire process of the control unit 26 in FIG. 2 ends as described above.

In the process of FIG. 2, the phone call may end before the vicarious operation is terminated. In such a case, the control unit 26 may execute the process at step S30 even while executing the loop of the processes at steps S22 and S24 to end the entire process of FIG. 2, or may give priority to the loop process at steps S22 and S24.

As described above, according to the first embodiment, the PC 20 includes: the communication unit 21 communicates with the phone device 10 through proximity communication or intra-body communication in response to the holding of the phone device 10 by the user; and the control unit 26 that displays information relating to the phone device 10 (for example, schedule data frequently used in conversation using the phone device 10, the screen displayed on the phone device 10 at the last minute, or the like) on the display unit 23 during the communication with the phone device 10. This allows the information relating to the phone device 10 to be displayed on the display unit 23 during the phone call using the phone device 10, thereby improving the convenience during the phone call using the phone device 10 by the user.

In the present embodiment, the PC 20 includes the storage unit 25 that stores data such as schedule data, and the control unit 26 provides a display relating to the data stored in the storage unit 25 on the display unit 23. Such automatic displaying of the data held by the PC 20 during the phone call using the phone device 10 can improve user's convenience. When the PC 20 is a desktop PC, two or more (e.g., two) display units 23 may be provided, and the aforementioned display may be provided with use of two or more display units 23.

In the present embodiment, the communication unit 21 receives data stored in the storage unit 16 of the phone device 10, and the control unit 26 provides a display relating to the data stored in the storage unit 16 on the display unit 23. Accordingly, the automatic displaying of the data held by the phone device 10 during the phone call using the phone device 10 can improve user's convenience. In this case, the user who is on the phone cannot see the display unit 14 of the phone device 10. Thus, the displaying of information on the display unit 23 of the PC 20 can improve the convenience of the user who is on the phone. In the present embodiment, nothing is displayed on the display unit 14 of the phone device 10 during the phone call, and thus the battery of the phone device 10 can be saved.

In the present embodiment, the communication unit 21 receives data relating to the display on the display unit 14 located in the phone device 10 (e.g., the information that has been displayed on the screen immediately before the phone call), and the control unit 26 provides a display according to the display provided on the display unit 14 on the display unit 23. Thus, the user can check data relating to the display provided on the display unit 14 (e.g., the information on the screen displayed immediately before the phone call) on the display unit 23 of the PC 20 even during the phone call.

In the present embodiment, the PC 20 includes the operation unit 24, the communication unit 21 that communicates with the phone device 10 through proximity communication or intra-body communication at the time of holding of the phone device 10, and the control unit 26 that causes the phone device 10 to operate in response to the operation of the operation unit 24 by the user during the communication with the phone device 10 through the communication unit 21. Accordingly, the user can carry out an operation to software that works in the phone device 10 (the operation to create an e-mail on a mailer or the like), or carry out an operation to an auto-answer system with use of the operation unit 24. Thus, the present embodiment allows the operation that has been conventionally difficult to carry out during the phone call using the phone device 10 to be carried out with use of the operation unit 24.

The above-described embodiment describes a case where the display is changed or the vicarious operation is executed when the intra-body communication between the PC 20 and the phone device 10 is established and the user is on the phone, but does not intend to suggest any limitation. For example, when the intra-body communication between the PC 20 and the phone device 10 is established, and the user carries out an operation other than the phone call on the phone device 10, the display may be changed or the vicarious operation may be executed. In this case, the control unit 26 may change the display on the display unit 23 in accordance with the contents of the operation of the phone device 10. For example, when the user views the list of e-mail addresses on the phone device 10, the list of e-mail addresses stored in the storage unit 16 of the PC 20 may be displayed on the display unit 23. Moreover, when the user views schedule data on the phone device 10, schedule data stored in the storage unit 16 of the PC 20 may be displayed on the display unit 23. Furthermore, when the user browses a Web page on the phone device 10, the same Web page (or a Web page for PCs corresponding to the Web page browsed on the phone device 10) may be displayed on the PC 20.

The PC 20 of the above-described embodiment may be a mobile terminal (a phone device) such as a mobile phone, a smartphone, or the like. The display unit 23 and the operation unit 24 may be located in a part of the glasses worn by the user.

### (Variation)

The above-described first embodiment describes a case where the phone device 10 is a mobile terminal such as a mobile phone or a smartphone, but does not intend to suggest any limitation. The phone device 10 may be a land-line phone. In this case, the alternate processing at steps S22 and S108 of FIG. 2 may allow the user to use the numeric keypad of the operation unit 24 of the PC 20 as a substitute when the user wants to forward a call, for example.

When the phone device 10 is a land-line phone as described above, the user may handle a house phone for a neighboring user in the office. In such a case, the control unit 26 may receive information about the neighboring user from the phone device 10, acquire the schedule data of the neighboring user from an unillustrated server (a server managing a schedule), and display the schedule data on the display unit 23 of the PC 20. As described above, when the user uses the phone device 10 for a specific user different from the user, the control unit 26 displays information (such as schedule) relating to the specific user on the display unit 23, allowing the user to take proper action.

The phone device 10 used by the user may include both a mobile terminal and a land-line telephone. In this case, at step S12 of FIG. 2, the control unit 26 may check the type of the phone device 10 (a mobile terminal or a land-line telephone), and execute control based on the type of the phone device in the alternate processing at step S22.

### <<Second Embodiment>>

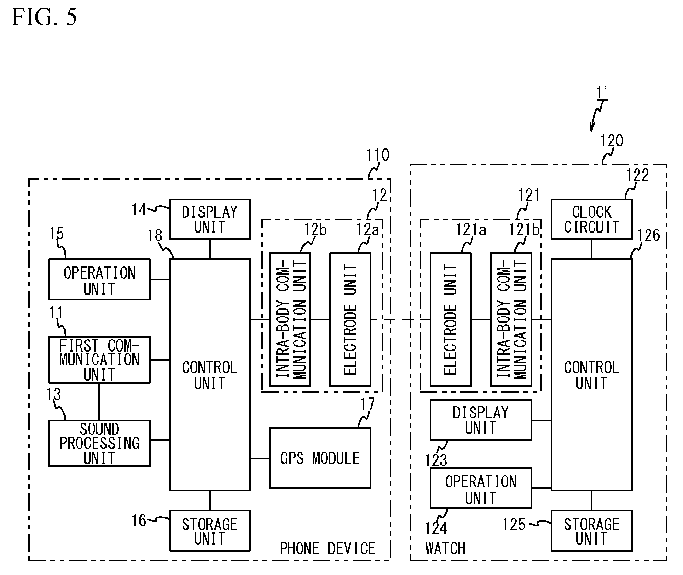

Hereinafter, a detailed description will be given of an information processing system in accordance with a second embodiment based on FIG. 5 through FIG. 8. FIG. 5 is a block diagram illustrating a configuration of an information processing system 1' in accordance with the second embodiment.

The information processing system 1' illustrated in FIG. 5 includes a phone device 110, and a watch 120. The configuration of the phone device 110 is the same as or similar to that of the phone device 10 of the first embodiment, and thus the description thereof is omitted. The operation unit 15 includes a sensor (e.g., a pressure sensor) located on the side surface of the phone device 110 (e.g., on both side surfaces at the longer sides).

The watch 120 includes a communication unit 121, a clock circuit 122, a display unit 123, an operation unit 124, a storage unit 125, and a control unit 126.

The communication unit 121 communicates with the phone device 110 through proximity communication or intra-body communication as with the communication unit 21 of the first embodiment. In the present embodiment, the communication unit 21 includes an electrode unit 121a and an intra-body communication unit 121b, and communicates with the phone device 110 through intra-body communication.

The electrode unit 121 a includes a signal electrode and a ground electrode, and is an electrode for intra-body communication through a user. In the present embodiment, the electrode unit 121a is located in a position that easily comes in contact with user's hand, for example, on a back surface of the main unit of the watch (a position where the battery is present), or a band.

The intra-body communication unit 121b includes a transmit unit composed of an electric circuit having a bandpass filter, and modulates data to be transmitted to generate a transmission signal. Assume that the intra-body communication unit has a receiving function.

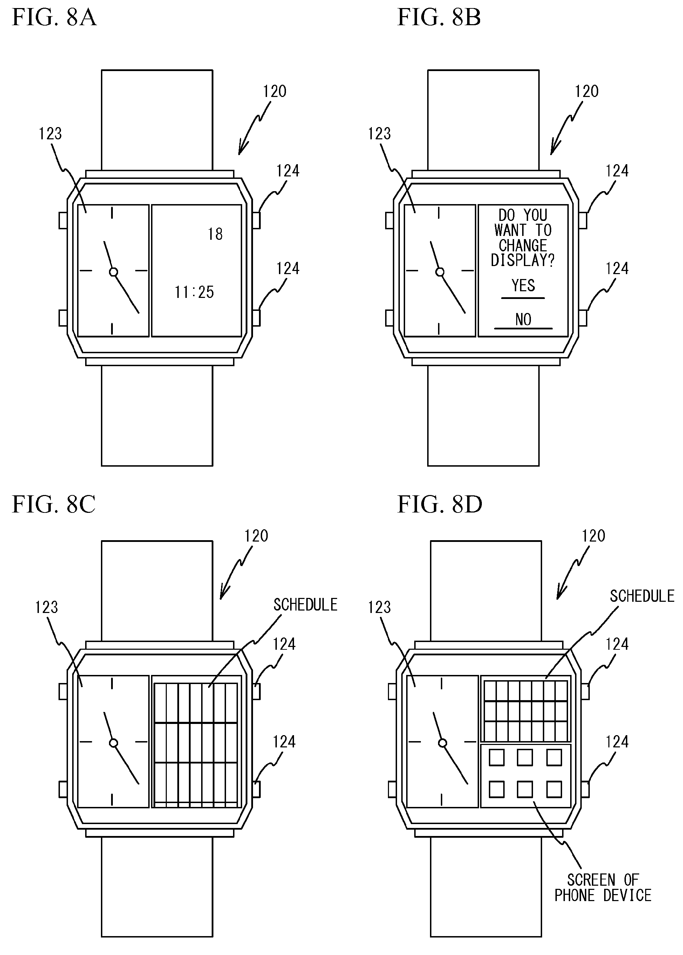

The clock circuit 122 includes a frequency dividing circuit and an oscillating circuit, and measures current time. The display unit 123 is, for example, a liquid crystal display, is located in the main unit of the watch (on a dial face part), and displays time measured by the clock circuit 122 and various information such as contents described in the storage unit 125. Moreover, in the present embodiment, the display unit 123 provides a display relating to the phone device 110. The operation unit 124 is multiple switches (operating buttons) located in the periphery of the display unit 123 (see FIG. 8A and the like).

The storage unit 125 includes, for example, a non-volatile flash memory, and stores various programs and various kinds of data.

The control unit 126 includes a CPU, a ROM, a RAM, and the like, and controls the whole of the watch 120. In the present embodiment, the control unit 126 controls the contents to be displayed on the display unit 123 when the intra-body communication with the phone device 110 is established, or receives user's operation to the operation unit 15 of the phone device 110 as the operation to the control unit 126 (the vicarious operation).

### (Process/Operation)

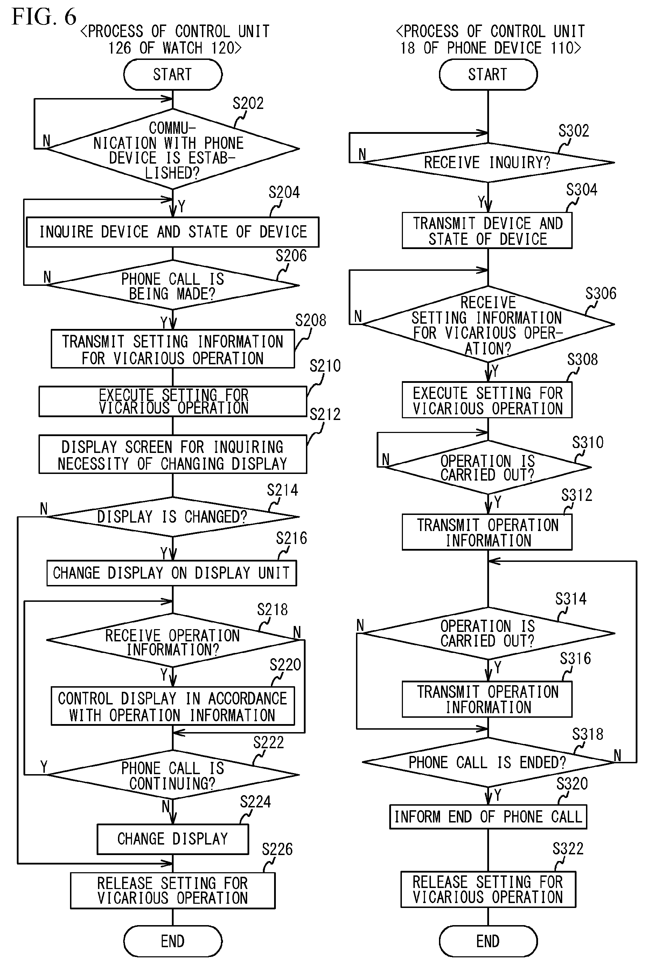

A detailed description will next be given of a process/an operation in the information processing system 1' along a flowchart of FIG. 6 with reference to other drawings as appropriate.

FIG. 6 illustrates a flowchart of a process of the control unit 126 of the watch 120 and a flowchart of a process of the control unit 18 of the phone device 110. The process of the control unit 126 and the process of the control unit 18 are simultaneously executed in parallel. Assume that the display illustrated in FIG. 8A (the display of an analog clock and the display of a digital clock) is provided on the display unit 123 of the watch 120 before the process of FIG. 6 is started.

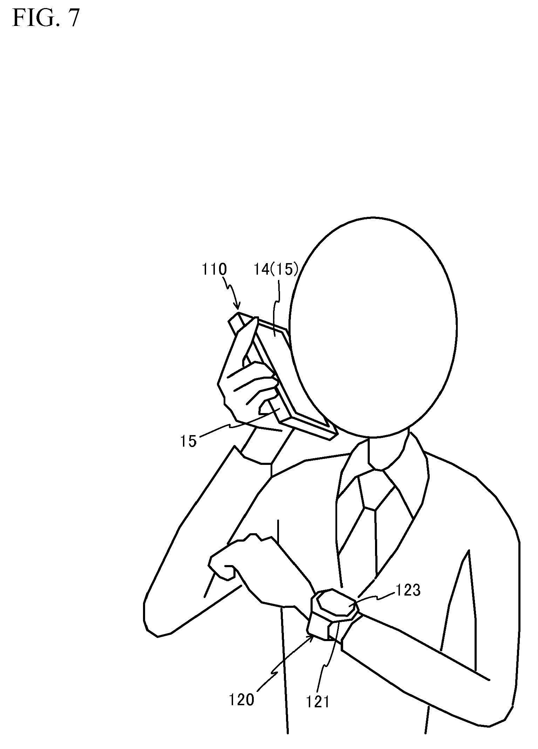

In the process of FIG. 6, the control unit 126 of the watch 120 waits until the communication with the phone device 110 is established at step S202. That is to say, the control unit 126 waits until the user wearing the watch 120 holds the phone device 110 in user's hand as illustrated in FIG. 7.

When the user becomes in the state illustrated in FIG. 7, the process moves to step S204. The control unit 126 inquires the information about the phone device 110 (the identification information) and the state of the phone device 110 (whether the user is on the phone) to the phone device 110. On the other hand, the control unit 18 of the phone device 110 waits until it receives the inquiry from the control unit 26 at step S302. Thus, when the inquiry is received, the control unit 18 moves to step S304, and transmits the information about the phone device 110 (the identification information) and the state of the phone device 110 to the watch 120 (the control unit 126).

On the other hand, after receiving the information from the control unit 18, the control unit 126 of the watch 120 determines whether the user is making a phone call on the phone device 110 at step S206. When the determination here is No, the process returns to step S204, and the process and the determination at steps S204 and S206 are repeated. That is, it can be said that at steps S204 and S206, the control unit 126 continues to inquire whether the user starts using the phone device 110 for the phone call to the control unit 18. On the other hand, when the determination at step S206 is Yes, the control unit 126 moves to step S208.

At step S208, the control unit 126 transmits setting information (setting information for the vicarious operation) for the operation unit 15 of the phone device 110 to the control unit 18 so that the user can operate the display unit 123 while seeing the display unit 123 of the watch. At step S210, the control unit 126 executes the setting for the vicarious operation to the control unit 126.

On the other hand, the control unit 18 of the phone device 110 waits until it receives the setting information for the vicarious operation at step S306. Thus, when the control unit 126 executes the process at step S208, the control unit 18 moves to step S308. At step S308, the control unit 18 executes the setting for the vicarious operation based on the received setting information for the vicarious operation.

On the other hand, the control unit 126 that has executed the setting for the vicarious operation at step S210 moves to step S212, and displays the screen for inquiring the necessity of changing the display (see FIG. 8B) on the display unit 123. Here, the screen for inquiring the necessity of changing the display is a screen that inquires whether to change the screen displayed on the display unit 123 to a screen that displays information relating to the phone device 110 to the user. The user may not notice that the screen for inquiring the necessity of changing the display is displayed on the display unit 123. Thus, the control unit 126 may inform the user of the displaying of the screen for inquiring the necessity of changing the display by vibrating an unillustrated vibrator included in the watch 120.

On the other hand, the control unit 18 of the phone device 110 waits until the operation to the screen for inquiring the necessity of changing the display is carried out at step S310. Here, the user cannot operate the operation unit 124 of the watch 120 on the left hand while holding the phone device 110 in the right hand as illustrated in FIG. 7. Therefore, in the present embodiment, the control unit 18 detects the position touched by the user with a force equal to a predetermined pressure or greater in the operation unit 15 (among pressure sensors on the side surfaces of the phone device 110) during the phone call, and determines that the operation corresponding to the detected position is carried out. When the determination at step S310 is Yes, the process moves to step S312, and the control unit 18 transmits operation information to the control unit 126.

The control unit 126 of the watch 120 that has received the operation information from the control unit 18 determines whether to change the display at step S214. For example, assume that a YES function is allocated to a pressure sensor located in an upper part on the right side surface of the phone device 110, and a NO function is allocated to a pressure sensor located in a lower part on the right side surface. In this case, the control unit 126 can determine whether to change the display based on the operation to the pressure sensor by the user. For example, when the operation information transmitted from the control unit 18 is information indicating that the pressure sensor located in the upper part on the right side surface is pressed with a force equal to a predetermined pressure or greater for a predetermined time (one to two seconds), the control unit 18 of the phone device 110 determines that user's operation is the YES operation. On the other hand, when the information transmitted from the control unit 18 is information indicating that the pressure sensor located in the lower part on the right side surface is pressed with a force equal to a predetermined pressure or greater for a predetermined time (one to two seconds), or information indicating that no operation is carried out for a predetermined time (e.g., five to ten seconds), the control unit 18 determines that user's operation is the NO operation.

In the present embodiment, in addition to the YES function and the NO function, a selection function may be allocated to a pressure sensor on the right side surface. Moreover, assume that the operation of sweeping the right side surface from the bottom to the top is an upward scroll operation, and the operation of sweeping the right side surface from the top to the bottom is a downward scroll operation.

When the determination at step S214 is No (when the display is not changed), the control unit 126 moves to step S226, releases the setting for the vicarious operation, and terminates the entire process of FIG. 6. When the determination at step S214 is Yes (when the display is to be changed), the control unit 126 moves to step S216.

At step S216, the control unit 126 changes the display on the display unit 123. More specifically, the control unit 126 provides the display illustrated in FIG. 8C to display schedule data stored in the storage unit 16 of the phone device 110. The display region of the display unit 23 of the watch 120 is small compared to the display region of the display unit 14 of the phone device 110, and may not be able to display the whole of the schedule data. In such a case, the control unit 26 splits the schedule data and displays it (displays it in a scrollable manner) based on the size of the display region of the display unit 23.

On the other hand, the control unit 18 of the phone device 110 determines whether the user has carried out an operation (whether the user has operated the pressure sensor on the right side surface) at step S314. When the determination here is No, the process moves to step S318. When the determination is Yes, the process moves to step S316.

At step S316, the control unit 18 transmits the information about the operation carried out by the user (e.g., the information about the scroll operation) to the control unit 126, and moves to step S318. At step S318, the control unit 18 determines whether the phone call on the phone device 110 is ended. When the determination here is No, the control unit 18 returns to step S314. When the determination is Yes, the control unit 18 informs the control unit 126 of the end of the phone call at step S320, and terminates the entire process of FIG. 6 after releasing the setting for the vicarious operation.

On the other hand, the control unit 126 of the watch 120 determines whether it has received the operation information at step S218. When the determination here is Yes, the process moves to step S220, and the control unit 126 controls the display in accordance with the received operation information. For example, when the user sweeps the pressure sensor, the operation of scrolling the schedule data is carried out in accordance with the sweeping direction. This allows the user to check the data of the desired date from the schedule data.

After step S220 or when the determination at step S218 is No, the process moves to step S222, and the control unit 126 determines whether the phone call is continuing. That is to say, the control unit 126 determines whether the process of step S320 is not executed in the control unit 18. When the determination here is Yes, the process returns to step S218, and the process and the determination of steps S218 through S222 are repeated. On the other hand, when the determination at step S222 is No, the process moves to step S224.

At step S224, the control unit 126 changes the display on the display unit 123. More specifically, the display illustrated in FIG. 8C is changed to (restored to) the display illustrated in FIG. 8A. After that, the control unit 126 moves to step S226, releases the setting for the vicarious operation, and then terminates the entire process of FIG. 6.

As described in detail, according to the second embodiment, the watch 120 includes the display unit 123 that provides a display, the communication unit 121 that communicates with the phone device 110 through proximity communication or intra-body communication in response to holding of the phone device 110 including the operation unit 15 by the user, and the control unit 126 that controls a display on the display unit 123 in accordance with the operation of the operation unit 15 by the user during the communication with the phone device 110 through the communication unit 121. This configuration allows the user to control the display on the display unit 123 by operating the operation unit 15 of the phone device 110. Thus, the user can easily operate the display on the display unit 123 when the user is holding the phone device 110 for a phone call and cannot operate the operation unit 124 of the watch 120. Therefore, user's convenience of use is improved.

The above-described second embodiment describes a case where schedule data is displayed on the display unit 123 of the watch 120, but does not intend to suggest any limitation. In addition to the schedule data, the contents that have been displayed on the display unit 14 of the phone device 110 before the phone call may be displayed as illustrated in FIG. 8D. In this case, the control unit 26 splits the schedule data and displays it (displays the schedule data in a scrollable manner). Accordingly, even when the display region is small as with that of the display unit 123 of the watch 120, the entire contents that have been displayed on the display unit 14 of the phone device 110 before the phone call can be seen by the scroll operation by the user.

In the above-described second embodiment, only the contents that have been displayed on the display unit 14 of the phone device 110 before the phone call may be displayed on the display unit 123, or schedule data or information other than the contents that have been displayed on the display unit 14 may be displayed on the display unit 123. The above-described second embodiment describes a case where the display of the analog clock is always provided on the display unit 123, but does not intend to suggest any limitation. The display of the digital clock may be always provided. The clock may be displayed on the right half of the display unit 123, and schedule data or the like may be displayed on the left half.

At step S216 of the above-described second embodiment, the display illustrated in FIG. 8C is automatically provided, but this does not intend to suggest any limitation. The user may select one of multiple display modes. For example, the control unit 126 may alternately display the screens illustrated in FIG. 8C and FIG. 8D every predetermined time, and may determine that the screen displayed when the pressure sensor located in the upper part on the right side surface of the phone device 110 is pressed is selected by the user. Alternatively, the control unit 126 may determine that the screen different from the screen being displayed is selected when the pressure sensor located in the lower part on the right side surface is pressed for a predetermined time (one to two seconds).

The above-described second embodiment describes a case where the display on the watch is changed in accordance with the operation to the pressure sensor by the user, but does not intend to suggest any limitation. The display on the watch may be changed in accordance with the operation to the touch panel located in the display unit 14 by the user (the move of the finger).

As with in the aforementioned second embodiment, operations such as the operation of changing the display on the display unit 23 of the PC 20 may be carried out by the operation of the operation unit 15 of the phone device 10 also in the above-described first embodiment

The order of the process described in the above-described embodiments is an example. That is to say, the orders of the processes of FIG. 2 and FIG. 6 may be changed as appropriate.

The above-described processing functions are implemented by a computer. In this case, a program in which processing details of the functions that a processing device (CPU) is to have are written are provided. The execution of the program by the computer allows the computer to implement the above described processing functions. The program in which the processing details are written can be stored in a storage medium (however, excluding carrier waves) capable of being read by a computer.

When the program is distributed, it may be sold in the form of a portable storage medium such as a DVD (Digital Versatile Disc) or a CD-ROM (Compact Disc Read Only Memory) storing the program.
The program may be stored in a storage device of a server computer, and the program may be transferred from the server computer to another computer over a network.

A computer executing the program stores the program stored in a portable storage medium or transferred from a server computer in its own storage device. The computer then reads the program from its own storage device, and executes a process according to the program. The computer may directly read the program from a portable storage medium, and execute a process according to the program. Alternatively, the computer may successively execute a process, every time the program is transferred from a server computer, according to the received program.

While the exemplary embodiments of the present invention have been illustrated in detail, the present invention is not limited to the above-mentioned embodiments, and other embodiments, variations and modifications may be made without departing from the scope of the present invention.

## Claims

1. An electronic device comprising:
a communication unit that communicates with, in response to use of an external device, the external device through proximity communication or intra-body communication; and
a control unit that displays information relating to the external device on a first display unit during communication with the external device.

2. The electronic device according to claim 1, further comprising:
a first storage unit that stores data,
wherein the control unit provides a display relating to the data stored in the first storage unit on the first display unit.

3. The electronic device according to claim 1 or 2, wherein
the communication unit receives data stored in a second storage unit included in the external device, and
the control unit provides a display relating to the data stored in the second storage unit on the first display unit.

4. The electronic device according to any one of claims 1 to 3, wherein
the communication unit receives data relating to a display provided on a second display unit included in the external device, and
the control unit provides a display according to the display provided on the second display unit on the first display unit.

5. The electronic device according to claim 4, wherein
the control unit provides a display according to the display provided on the second display unit on the first display unit when a user using the external device cannot see the second display unit.

6. The electronic device according to any one of claims 1 to 5, wherein
the control unit displays a schedule of a user using the external device on the first display unit.

7. The electronic device according to any one of claims 1 to 6, wherein
the control unit displays, when a user uses the external device for a specific user different from the user, a schedule of the specific user on the first display unit.

8. The electronic device according to any one of claims 1 to 7, wherein
the control unit displays information to assist a user using the external device to make contact with another user on the first display unit.

9. The electronic device according to any one of claims 1 to 8, wherein
the communication unit receives operation data of an operation unit included in the external device, and
the control unit controls a display on the first display unit based on the operation data.

10. The electronic device according to any one of claims 1 to 8, wherein
the control unit changes information displayed on the first display unit depending on a user with whom a user using the external device makes contact.

11. An electronic device comprising:
an operation unit;
a communication unit that communicates with, in response to use of an external device, the external device through proximity communication or intra-body communication; and
a control unit that causes the external device to operate in accordance with an operation of the operation unit during communication with the external device through the communication unit.

12. The electronic device according to claim 11, further comprising:
a data transmitting unit that transmits data created by a user through an operation of the operation unit to a predetermined destination.

13. The electronic device according to claim 11 or 12, further comprising:
a display unit that provides a display,
wherein the control unit controls a display on the display unit in accordance with an operation of the operation unit by a user.

14. The electronic device according to claim 13, wherein
the operation unit includes a touch panel provided to the display unit, and
the control unit displays an operation screen of the external device on the display unit and causes the external device to operate in accordance with an operation of the touch panel by a user during communication with the external device through the communication unit.

15. An electronic device comprising:
a first display unit that provides a display;
a communication unit that communicates with, in response to use of an external device including an operation unit, the external device through proximity communication or intra-body communication; and
a control unit that controls a display on the first display unit in accordance with an operation of the operation unit by a user during communication with the external device through the communication unit.

16. The electronic device according to claim 15, wherein
the external device includes a second display unit, and
the control unit controls, when a user cannot see the second display unit, the display on the first display unit in accordance with an operation of the operation unit by the user.

17. The electronic device according to claim 16, wherein
the control unit provides a display according to a display provided on the second display unit on the first display unit.

18. The electronic device according to claim 17, wherein
the control unit provides the display provided on the second display unit on the first display unit in a scrollable manner.

19. The electronic device according to claim 18, wherein
the control unit controls scrolling of the display on the first display unit in accordance with an operation of the operation unit by a user.

20. A program causing a computer embedded in an electronic device including a display unit to execute a process, the process comprising:
communicating with, in response to use of an external device, the external device; and
displaying information relating to the external device on the display unit during communication with the external device.

21. A program causing a computer embedded in an electronic device including an operation unit to execute a process, the process comprising:
communicating with, in response to use of an external device, the external device;
receiving an operation to the operation unit by a user during communication with the external device; and
causing the external device to operate in accordance with the operation by the user.

22. A program causing a computer embedded in an electronic device including a display unit to execute a process, the process comprising:
communicating with, in response to use of an external device including an operation unit, the external device;
acquiring information about an operation of the operation unit by a user from the external device during communication with the external device; and
controlling a display on the display unit in accordance with acquired information about the operation.
